# EUROPEAN PATENT SPECIFICATION

(11) **EP 4 365 044 B1**
(45) Date of publication and mention of the grant of the patent: **05.03.2025**
(21) Application number: 23200022.4
(22) Date of filing: 27.09.2023
(51) Int. Cl.: B60W 30/02, B60W 30/14, B62K 11/00

(54) **STRADDLED VEHICLE**
GRÄTSCHSITZFAHRZEUG
VÉHICULE À SELLE

(30) Priority: 01.11.2022 JP 2022175254
(43) Date of publication of application: 08.05.2024
(73) Proprietor: YAMAHA HATSUDOKI KABUSHIKI KAISHA, Iwata-shi, Shizuoka-ken 438-8501 (JP)
(72) Inventor: NAKAMURA, Shota, Iwata-shi 438-8501 (JP); KASAI, Satoshi, Iwata-shi 438-8501 (JP); SUGITA, Kenji, Iwata-shi 438-8501 (JP); SUZUKI, Akihiro, Iwata-shi 438-8501 (JP)
(74) Representative: Studio Torta S.p.A.

(56) References cited:
- WO-A1-2022/038075
- DE-A1- 102011 082 692
- DE-A1- 102018 203 468

## Description

### Technical field

The present invention relates to a straddled vehicle including a detection device that detects an inter-vehicle distance from a preceding vehicle and an electronically controlled suspension.

### Prior art

Conventionally, straddled vehicles that include, as a suspension, such as a front fork, a rear suspension, or the like, an electronically controlled suspension capable of adjusting a damping force by electronic control have been known. Also, a straddled vehicle that includes a radar device that detects front of a vehicle has been known. For example, Japanese Patent No. 6842568 describes a straddled vehicle including an electronically controlled suspension and a radar device. WO-A-2022/038075 discloses a straddled vehicle according to the preamble of claim 1.

Straddled vehicles that perform control in which traveling at a set constant speed is caused on a highway or the like have been known. Moreover, straddled vehicles that perform control in which following a preceding vehicle is caused while keeping a predetermined inter-vehicle distance have been known. Such control will be hereinafter referred to as cruise control. During such control, a straddled vehicle performs stable traveling with only few changes of a posture of a vehicle body. While the straddled vehicle performs stable traveling, when a damping force of a suspension is large, vibrations from a road surface are likely to be transmitted to a rider, so that riding comfort is reduced.

In view of the foregoing, the present invention has been devised and it is therefore an object of the present invention to increase riding comfort during cruise control in a straddled vehicle that performs cruise control.

### Description of the invention

A straddled vehicle according to the invention includes a vehicle body frame, a front wheel supported by the vehicle body frame, a rear wheel supported by the vehicle body frame, an electronically controlled front suspension connected to the vehicle body frame and the front wheel, an electronically controlled rear suspension connected to the vehicle body frame and the rear wheel, a vehicle speed sensor supported by the vehicle body frame, a preceding vehicle detection device that is supported by the vehicle body frame and detects an inter-vehicle distance from a preceding vehicle, and a control device connected to the front suspension, the rear suspension, the vehicle speed sensor, and the preceding vehicle detection device. The control device includes a traveling controller and a suspension controller. The traveling controller executes cruise control including control in which the straddled vehicle is caused to travel such that a vehicle speed detected by the vehicle speed sensor is a set speed or control in which the straddled vehicle is caused to follow the preceding vehicle such that the vehicle speed detected by the vehicle speed sensor is equal to or lower than the set speed and the inter-vehicle distance detected by the preceding vehicle detection device is a set distance. The suspension controller executes control in which, when the cruise control is started, a damping force of the front suspension and/or a damping force of the rear suspension is reduced and, when the cruise control is terminated, the damping force of the front suspension and/or the damping force of the rear suspension is increased.

According to the straddled vehicle, when cruise control is started, the damping force of the front suspension and/or the rear suspension is reduced, so that, during cruise control, vibrations from a road surface are less likely to be transmitted to a rider. Therefore, riding comfort during cruise control can be increased. When cruise control is terminated, the damping force of the front suspension and/or the rear suspension is increased, so that a behavior of the vehicle is stabilized at sudden braking, during cornering, or the like.

The straddled vehicle may further include an accelerator operator that is supported by the vehicle body frame and is operated by a rider. The control device may include a temporary stopper that, when an operation of the accelerator operator is started while the traveling controller is executing the cruise control, stops the cruise control of the traveling controller and the control of the suspension controller and, when the operation of the accelerator operation is terminated, restarts the cruise control of the traveling controller and the control of the suspension controller.

Thus, when the rider operates the accelerator operator during cruise control, the cruise control is temporarily stopped and the straddled vehicle accelerates. At this time, there is a probability that, with the damping force of the front fork and/or the rear suspension kept reduced, pitching due to acceleration occurs. However, when the rider operates the accelerator operator, control in which the damping force of the suspension controller is reduced is temporarily stopped, so that the damping force of the front fork and/or the rear suspension is restored to a damping force before the control. Therefore, when the rider accelerates the straddled vehicle at his or her own intension, pitching can be suppressed.

According to the present invention, riding comfort during cruise control can be increased in a straddled vehicle that performs cruise control.

### Brief description of the drawings

FIG. 1 is a side view of a motorcycle according to an embodiment.
FIG. 2 is a diagram illustrating a configuration of a control system of a motorcycle.
FIG. 3 is a diagram illustrating a configuration of a front fork.
FIG. 4 is a diagram illustrating a configuration of a rear suspension.
FIG. 5 is a functional block diagram of a control device.
FIG. 6 is a flowchart of an example of control performed by a motorcycle.

### Embodiments of the invention

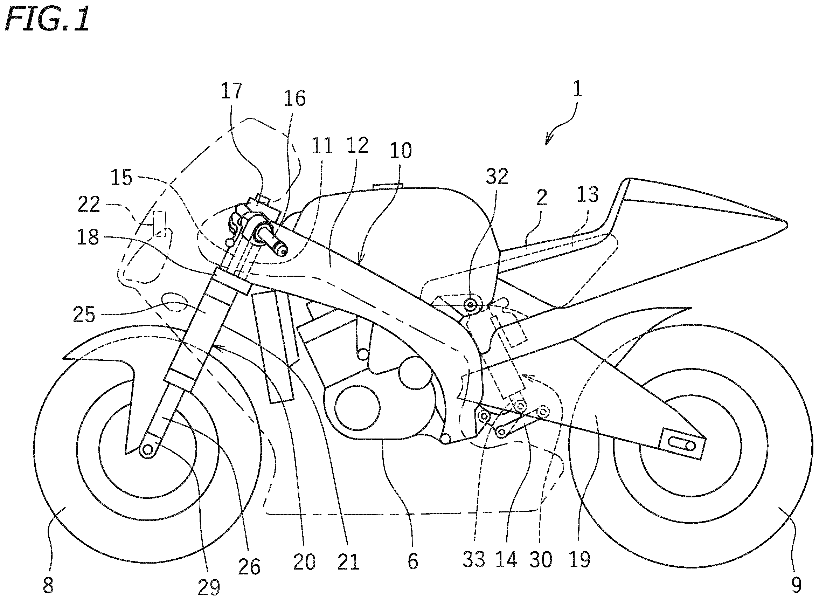

With reference to the attached drawings, one embodiment of a straddled vehicle will be described below. As illustrated in FIG. 1, a straddled vehicle according to this embodiment is a motorcycle 1.

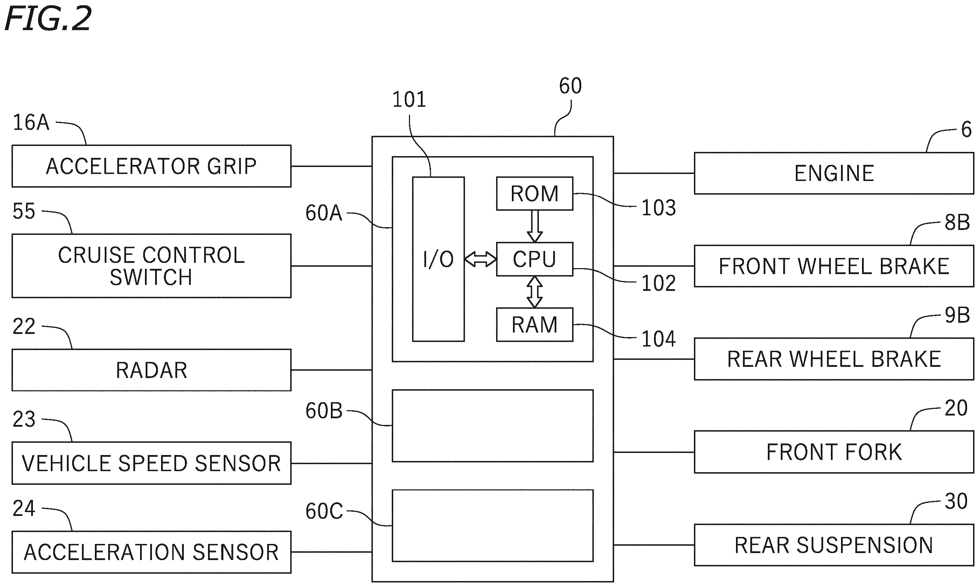

As illustrated in FIG. 1, the motorcycle 1 includes a vehicle body frame 10, a seat 2 supported by the vehicle body frame 10, an internal combustion engine (which will be hereinafter referred to as an engine) 6 supported by the vehicle body frame 10, a front wheel 8 and a rear wheel 9 supported by the vehicle body frame 10, an electronically controlled front fork 20 connected to the vehicle body frame 10 and the front wheel 8, an electronically controlled rear suspension 30 connected to the vehicle body frame 10 and the rear wheel 9, and a radar 22. As illustrated in FIG. 2, the motorcycle 1 includes an accelerator grip 16A that is an example of the accelerator operator, a cruise control switch 55 that turns on and off cruise control that will be described later, a vehicle speed sensor 23 that detects a speed of the motorcycle 1, an acceleration sensor 24 that detects an acceleration of the motorcycle 1, a front wheel brake 8B that brakes the front wheel 8, a rear wheel brake 9B that brakes the rear wheel 9, and a control device 60. The control device 60 is communicably connected to the accelerator grip 16A, the cruise control switch 55, the radar 22, the vehicle speed sensor 23, the acceleration sensor 24, the engine 6, the front wheel brake 8B, the rear wheel brake 9B, the front fork 20, and the rear suspension 30.

As illustrated in FIG. 1, the vehicle body frame 10 includes a head pipe 11, a main frame 12 extending rearward from the head pipe 11, and a seat frame 13 extending rearward from the main frame 12. The seat 2 is supported by the seat frame 13.

A steering shaft 15 is rotatably inserted in the head pipe 11. A handlebar 16 is mounted on an upper end portion of the steering shaft 15. Although not illustrated in FIG. 1, the accelerator grip 16A is rotatably mounted to a right end portion of the handlebar 16. An upper bracket 17 is fixed to the upper end portion of the steering shaft 15. An under bracket 18 is fixed to a lower end portion of the steering shaft 15.

The engine 6 is supported by the vehicle body frame 10. The engine 6 is an example of a drive source that drives the rear wheel 9. However, the drive source for traveling is not limited to the engine 6. The drive source may include an electric motor. The drive source may include both of an internal combustion engine and an electric motor.

The front wheel 8 is supported by the head pipe 11 of the vehicle body frame 10 via the front fork 20. The rear wheel 9 is supported by the main frame 12 of the vehicle body frame 10 via a rear arm 19. A front end portion of the rear arm 19 is rotatably connected to the main frame 12 via an unillustrated pivot shaft. A rear end portion of the rear arm 19 is connected to the rear wheel 9. The rear wheel 9 is connected to the engine 6 via a power transmission member (not illustrated), such as a chain of the like. The rear wheel 9 is a drive wheel and receives a driving force of the engine 6 to rotate.

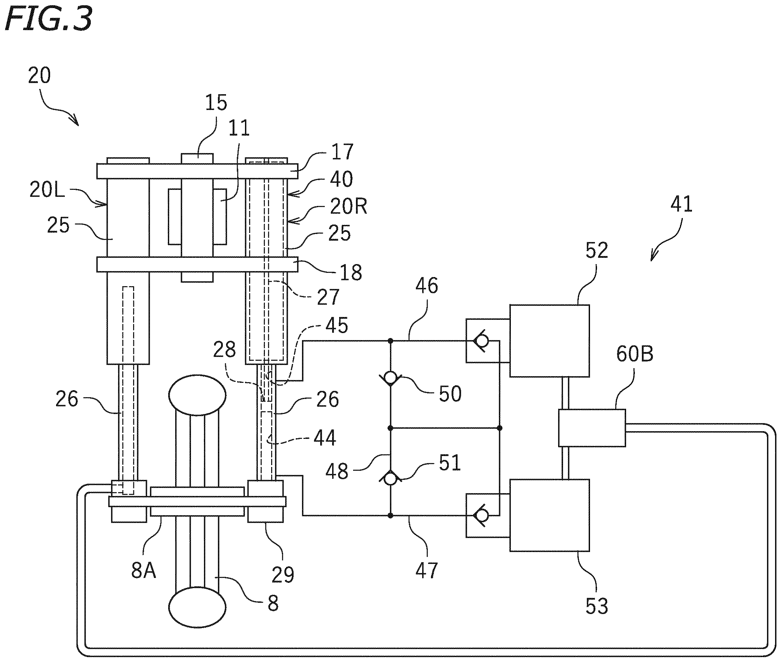

The front fork 20 is an example of an electronic controlled suspension. Note that the electronic controlled suspension is a suspension in which at least a damping force characteristic is adjusted by electronic control. Herein, the front fork 20 is configured such that both a damping force characteristic and a spring characteristic are adjustable by electronic control. As illustrated in FIG. 3, the front fork 20 is fixed to the upper bracket 17 and the under bracket 18. The front fork 20 includes a left tube 20L and a right tube 20R.

Each of the left tube 20L and the right tube 20R includes an outer tube 25 and an inner tube 26. The outer tube 25 is mounted to the upper bracket 17 and the under bracket 18. A lower end portion of the inner tube 26 is joined to an axle 8A of the front wheel 8 via an axle bracket 29. The inner tube 26 is slidably inserted inside the outer tube 25. The inner tube 26 slides against the outer tube 25, so that the front fork 20 expands and contracts. In this embodiment, when the inner tube 26 moves downward with respect to the outer tube 25, the front fork 20 expands. When the inner tube 26 moves upward with respect to the outer tube 25, the front fork 20 contracts. Downward and upward correspond to an expansion direction and a contraction direction of the front fork 20, respectively.

Although not illustrated, a fork spring is arranged inside each of the right tube 20R and the left tube 20L. The fork spring is an example of a spring of the front fork 20.

The right tube 20R includes an oil-type shock absorber 40 that is electronically controlled. The shock absorber 40 includes the inner tube 26, a rod 27, a piston 28, and a control valve assembly 41. The rod 27 is undisplaceably fixed to the outer tube 25. The piston 28 is connected to a lower end portion of the rod 27. The piston 28 is arranged inside the inner tube 26. An inner space of the inner tube 26 is partitioned into an oil chamber 44 and an oil chamber 45 by the piston 28.

The control valve assembly 41 is connected to the oil chamber 44 and the oil chamber 45. The control valve assembly 41 includes oil paths 46 to 48, check valves 50 and 51, and electronically controlled piston valves 52 and 53. The check valve 50 is arranged between the oil path 46 and the oil path 48. The check valve 50 allows a flow of oil from the oil path 48 to the oil path 46 and prohibits a flow of oil from the oil path 46 to the oil path 48. The check valve 51 is arranged between the oil path 47 and the oil path 48. The check valve 51 allows a flow of oil from the oil path 48 to the oil path 47 and prohibits a flow of oil from the oil path 47 to the oil path 48. The piston valve 52 connects the oil path 46 and the oil path 48. The piston valve 52 allows a flow of oil from the oil path 46 to the oil path 48 and prohibits a flow of oil from the oil path 48 to the oil path 46. The piston valve 53 connects the oil path 47 and the oil path 48. The piston valve 53 allows a flow of oil from the oil path 47 to the oil path 48 and prohibits a flow of oil from the oil path 48 to the oil path 47. Each of the piston valves 52 and 53 is constituted of, for example, a solenoid valve.

When oil flows through the piston valve 52, the oil receives a flow resistance. Degree of the flow resistance caused by the piston valve 52 is controlled by the control device 60 (specifically, a control unit 60B that will be described later). When the control device 60 increases the flow resistance of the piston valve 52, the oil receives more resistance as the oil flows from the oil path 46 to the oil path 48. Thus, the oil is difficult to flow from the oil chamber 45 to the oil chamber 44 through the control valve assembly 41, so that a damping force of the front fork 20 in the expansion direction is increased. Conversely, when the control device 60 reduces the flow resistance of the piston valve 52, the damping force of the front fork 20 in the expansion direction is reduced.

When the oil flows through the piston valve 53, the oil receives a flow resistance. Degree of the flow resistance caused by the piston valve 53 is controlled by the control device 60. When the control device 60 increases the flow resistance of the piston valve 53, the oil receives more resistance as the oil flows from the oil path 47 to the oil path 48. Thus, the oil is difficult to flow from the oil chamber 44 to the oil chamber 45 through the control valve assembly 41, so that a damping force of the front fork 20 in the contraction direction is increased. Conversely, when the control device 60 reduces the flow resistance of the piston valve 53, the damping force of the front fork 20 in the contraction direction is reduced.

As illustrated in FIG. 1, an upper end portion 32 of the rear suspension 30 is fixed to the main frame 12 via a bracket. A lower end portion 33 of the rear suspension 30 is connected to a joining member 14 fixed to the rear arm 19. The rear suspension 30 is indirectly connected to the vehicle body frame 10 and the rear wheel 9.

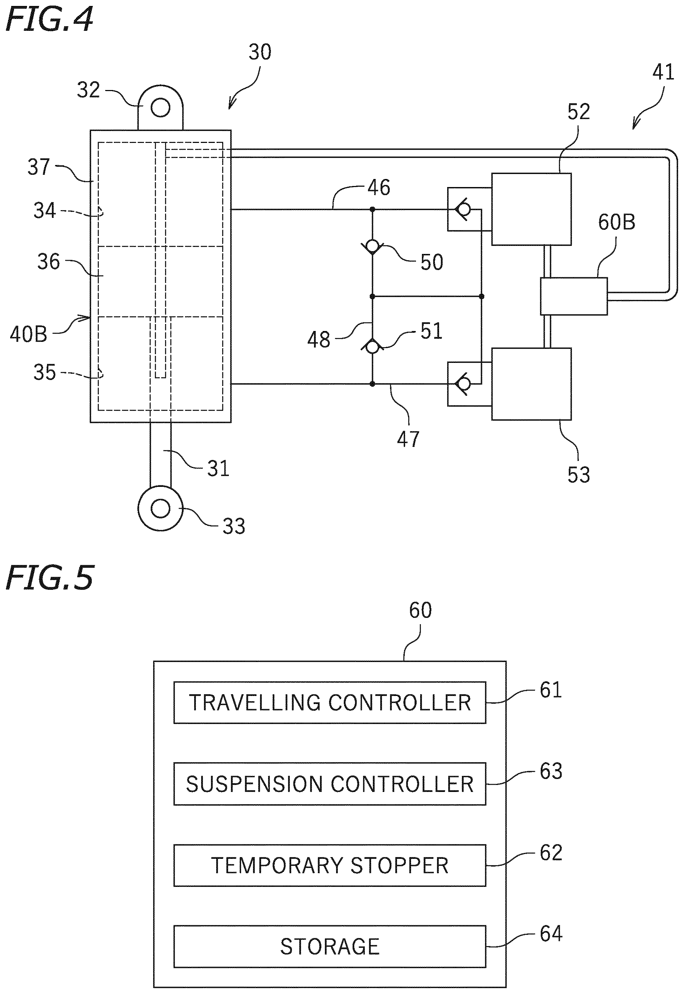

The rear suspension 30 is another example of the electronically controlled suspension. Herein, the rear suspension 30 is configured such that a damping force characteristic and a spring characteristic can be adjusted by electronic control. The rear suspension 30 includes an unillustrated spring. Moreover, as illustrated in FIG. 4, the rear suspension 30 includes an oil-type shock absorber 40B that is electronically controlled. The shock absorber 40B includes a cylinder 37, a piston 36 slidably arranged inside the cylinder 37, and a rod 31 extending from the piston 36. An internal space of the cylinder 37 is partitioned into an oil chamber 34 and an oil chamber 35 by the piston 36. When the piston 36 moves downward, the rear suspension 30 expands. When the piston 36 moves upward, the rear suspension 30 contracts. Downward and upward correspond to an expansion direction and a contraction direction of the rear suspension 30, respectively.

The rear suspension 30 includes a control valve assembly 41 that is similar to the control valve assembly 41 of the front fork 20. Each member that is similar to a corresponding member of the control valve assembly 41 of the front fork 20 will be denoted below by the same reference character as that of the corresponding member of the control valve assembly 41 and description thereof will be omitted. In the rear suspension 30, the oil path 46 of the control valve assembly 41 is connected to the oil chamber 34. The oil path 47 of the control valve assembly 41 is connected to the oil chamber 35.

When the control device 60 (specifically, the control unit 60B that will be described later) increases the flow resistance of the piston valve 52, the oil is difficult to flow from the oil chamber 34 to the oil chamber 35 through the control valve assembly 41, so that a damping force of the rear suspension 30 in the contraction direction is increased. Conversely, when the control device 60 reduces the flow resistance of the piston valve 52, the damping force of the rear suspension 30 in the contraction direction is reduced.

When the control device 60 increases the flow resistance of the piston valve 53, the oil is difficult to flow from the oil chamber 35 to the oil chamber 34 through the control valve assembly 41, so that a damping force of the rear suspension 30 in the expansion direction is increased. Conversely, when the control device 60 reduces the flow resistance of the piston valve 53, the damping force of the rear suspension 30 in the expansion direction is reduced.

The radar 22 (see FIG. 1) is an example of a preceding vehicle detection device that detects an inter-vehicle distance from a preceding vehicle (that is, another vehicle that travels in front of the motorcycle 1). The radar 22 transmits electromagnetic waves, such as millimeter waves or the like, toward front of the vehicle and receives their reflected waves. The radar 22 is supported by the vehicle body frame 10 and is installed in a front portion of the motorcycle 1. Note that, as the preceding vehicle detection device, a device that detects an inter-vehicle distance from a preceding vehicle is sufficient, and the preceding vehicle detection device is not limited to the radar 22. The preceding vehicle detection device may be constituted of a laser, a camera, or the like.

The cruise control switch 55 is an input device that is operated by the rider. The cruise control switch 55 is mounted, for example, to the handlebar 16 (see FIG. 1). The cruise control switch 55 is provided, for example, to a meter (not illustrated). The cruise control switch 55 may be a push button type switch, may be a touch panel type switch, and there is no particular limitation on a specific configuration thereof.

The control device 60 is constituted of one or two or more microcomputers. In this embodiment, as illustrated in FIG. 2, the control device 60 includes a plurality of control units. Specifically, the control device 60 includes a control unit 60A that controls the engine 6, a control unit 60B that controls the front fork 20 and the rear suspension 30, and a control unit 60C that controls the front wheel brake 8B and the rear wheel brake 9B. The control unit 60A includes an interface 101, a CPU 102, a ROM 103, a RAM 104, or the like. Although not illustrated, each of the control units 60B and 60C also includes an interface 101, a CPU 102, a ROM 103, a RAM 104, or the like. The control units 60A, 60B, and 60C are formed as separate bodies and are arranged in places apart from each other. The control units 60A, 60B, and 60C are communicably connected to each other. However, there is no limitation on a configuration of the control device 60. The control device 60 may be constituted of a single control unit.

As described above, the motorcycle 1 includes the vehicle speed sensor 23 that detects the speed of the motorcycle 1 and the acceleration sensor 24 that detects the acceleration of the motorcycle 1. The acceleration sensor 24 is constituted of, for example, an inertia measurement unit (IMU).

FIG. 5 is a functional block diagram of the control device 60. The CPU 102 of the control device 60 (see FIG. 2) executes computer programs stored in the ROM 103 or the like to function as a traveling controller 61 that executes cruise control, a suspension controller 63 that controls the front fork 20 and the rear suspension 30, and a temporary stopper 62 that temporarily stops controls of the traveling controller 61 and the suspension controller 63. Note that cruise control is control in which a vehicle is caused to travel such that a vehicle speed is a preset speed (which will be hereinafter referred to as a set speed) or control (which will be hereinafter referred to as an adaptive cruise control) in which a vehicle is caused to follow a preceding vehicle such that a vehicle speed is equal to or lower than the set speed and an inter-vehicle distance from a preceding vehicle is a preset inter-vehicle distance (which will be referred to as a set distance). The set distance may be a predetermined distance or may be a predetermined distance range. The set distance may vary in accordance with the speed of the motorcycle 1. For example, when the speed of the motorcycle 1 is relatively high, the set distance may be a relatively long distance, and when the speed of the motorcycle 1 is relatively low, the set distance may be a relatively short distance. The ROM 103 or the RAM 104 of the control device 60 functions as a storage 64 that stores computer programs of various controls, a map related to parameters of various controls, or the like. Note that the control device 60 may include, as the storage 64, some other memory than the ROM 103 and the RAM 104.

Although not illustrated, each of the front wheel brake 8B and the rear wheel brake 9B includes a hydraulic brake caliper. The traveling controller 61 controls a hydraulic pressure of the brake caliper to control on and off and a braking force of each of the front wheel brake 8B and the rear wheel brake 9B. During the adaptive cruise control, the traveling controller 61 controls the engine 6, the front wheel brake 8B, and the rear wheel brake 9B, based on at least the inter-vehicle distance detected by the radar 22. In this embodiment, the traveling controller 61 increases or reduces an output of the engine 6 or actuates the front wheel brake 8B and/or the rear wheel brake 9B, based on the inter-vehicle distance detected by the radar 22, the speed of the motorcycle 1 detected by the vehicle speed sensor 23, and the acceleration of the motorcycle 1 detected by the acceleration sensor 24. Note that an acceleration can be a positive value and a negative value. In the following, a negative acceleration will be also referred to as a deceleration, and negatively accelerating will be referred to as decelerating.

During the adaptive cruise control, when the speed of the motorcycle 1 is equal to or lower than the set speed and the inter-vehicle distance is larger than the set distance, the traveling controller 61 increases the output of the engine 6. Thus, the motorcycle 1 accelerates and the inter-vehicle distance reduces. Conversely, during the adaptive cruise control, when the inter-vehicle distance is reduced to be smaller than the set distance, the traveling controller 61 reduces the output of the engine 6, and furthermore, actuates the front wheel brake 8B and/or the rear wheel brake 9B, as necessary. Thus, the motorcycle 1 decelerates and the inter-vehicle distance is increased. In a manner described above, the motorcycle 1 follows the preceding vehicle while keeping the inter-vehicle distance at the set distance.

The suspension controller 63 can control the damping force of the front fork 20, a spring reaction force of the front fork 20, the damping force of the rear suspension 30, and a spring reaction force of the rear suspension 30. When the damping forces of the front fork 20 and the rear suspension 30 are large, expansion and contraction operations of the front fork 20 and the rear suspension 30 are stiff. When the damping forces of the front fork 20 and the rear suspension 30 are large, a behavior of the vehicle body is stabilized at sudden braking or during cornering, but vibrations from a road surface are likely to be transmitted to the rider. On the other hand, when the damping forces of the front fork 20 and the rear suspension 30 are small, the expansion and contraction operations of the front fork 20 and the rear suspension 30 are soft. When the damping forces of the front fork 20 and the rear suspension 30 are small, vibrations from the road surface are less likely to be transmitted to the rider.

The temporary stopper 62 is configured to, while the rider is operating the accelerator grip 16A, temporarily stop cruise control by the traveling controller 61 and control of the damping forces of the front fork 20 and the rear suspension 30 by the suspension controller 63. Specifically, when the rider starts an operation of the accelerator grip 16A, the temporary stopper 62 stops cruise control by the traveling controller 61 and control in which the damping forces of the front fork 20 and the rear suspension 30 are reduced by the suspension controller 63. When the rider terminates the operation of the accelerator grip 16A, the temporary stopper 62 restarts cruise control by the traveling controller 61 and control in which the damping forces of the front fork 20 and the rear suspension 30 are reduced by the suspension controller 63. The temporary stopper 62 receives a signal from the accelerator grip 16A and determines whether the accelerator grip 16A is being operated. When the temporary stopper 62 detects that the accelerator grip 16A is being operated, the temporary stopper 62 transmits a signal to the traveling controller 61 and the suspension controller 63 and disables control of each of the traveling controller 61 and the suspension controller 63.

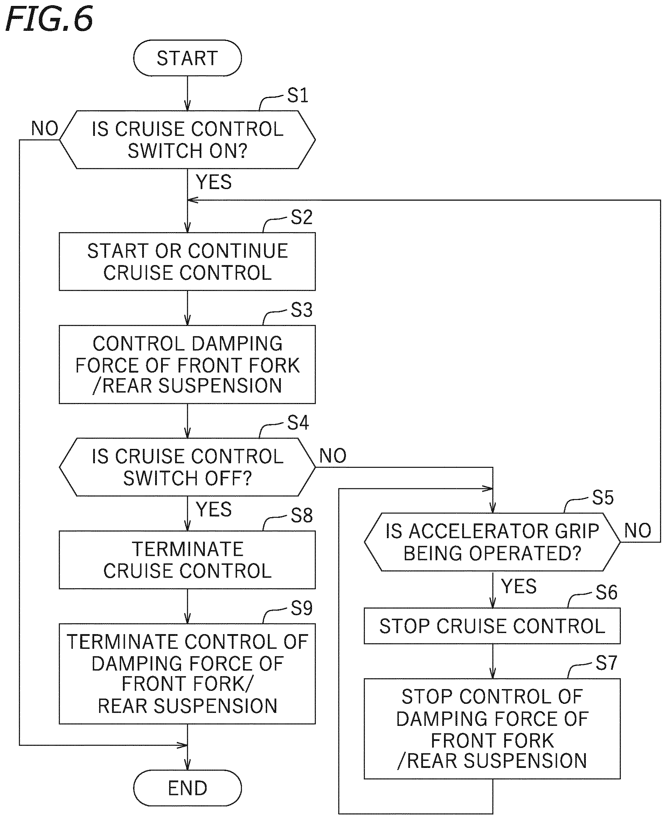

Next, with reference to a flowchart of FIG. 6, an example of control of the motorcycle 1 will be described. Control described below is executed by the control device 60.

First, in Step S1, whether the cruise control switch 55 is on is determined. When a determination result is YES, the process proceeds to Step S2. In Step S2, when cruise control is not performed, cruise control is started and, when cruise control is being performed, the cruise control is continued.

Subsequently, the process proceeds to Step S3, the suspension controller 63 performs control in which the damping force of the front fork 20 and the damping force of the rear suspension 30 are reduced. For example, when it is assumed that the damping force of the front fork 20 and the damping force of the rear suspension 30 before cruise control is executed are a first value and a second value, respectively, the suspension controller 63 reduces the damping force of the front fork 20 to a third value smaller than the first value and the damping force of the rear suspension 30 to a fourth value that is smaller than the second value. Thus, expansion and contraction operations of the front fork 20 and the rear suspension 30 become soft. The front fork 20 and the rear suspension 30 can easily absorb vibrations from a road surface, and therefore, the vibrations from the road surface less likely to transmitted to the rider. Note that Step S3 may be performed before Step S2 and may be simultaneously performed with Step S2.

Next, in Step S4, whether the cruise control switch 55 has been turned off is determined. When a determination result is NO, the process proceeds to Step S5.

In Step S5, whether the rider is operating the accelerator grip 16A is determined. When the rider is operating the accelerator grip 16A, the rider desires accelerated traveling of the motorcycle 1, not cruise control. Therefore, when a determination result of Step S5 is YES, the process proceeds to Step S6 and the traveling controller 61 stops cruise control. In this case, when the damping forces of the front fork 20 and the rear suspension 30 are kept reduced, the front fork 20 and the rear suspension 30 are relatively easy to expand and contract, and thus, there is a probability that, when the motorcycle 1 accelerates, pitching occurs. Therefore, in Step S7, the suspension controller 63 stops control in which the damping forces of the front fork 20 and the rear suspension 30 are reduced. For example, the suspension controller 63 restores the damping force of the front fork 20 back to the first value from the third value and restores the damping force of the rear suspension 30 back to the second value from the fourth value. Note that Step S7 may be performed before Step S6 and may be simultaneously performed with Step S6. After Step S7, the process returns to Step S5.

In Step S5, when it is determined that the rider is not operating the accelerator grip 16A (in other words, when the determination result is NO), the process returns to Step S2. When cruise control and control of the front fork 20 and the rear suspension 30 are stopped, in Step S2, cruise control is restarted and, in Step S3, control of the damping forces of the front fork 20 and the rear suspension 30 is restarted. For example, the damping force of the front fork 20 is reduced from the first value to the third value and the damping force of the rear suspension 30 is reduced from the second value to the fourth value.

In Step S4, when it is determined that the cruise control switch 55 has been turned off, the process proceeds to Step S8. In Step S8, the traveling controller 61 terminates cruise control. Subsequently, the process proceeds to Step S9 and the suspension controller 63 terminates control in which the damping forces of the front fork 20 and the rear suspension 30 are reduced. In this case, the suspension controller 63 restores the damping forces of the front fork 20 and the rear suspension 30 to the damping forces of the front fork 20 and the rear suspension 30 before cruise control is started, respectively. For example, the suspension controller 63 increases the damping force of the front fork 20 from the third value to the first value and the damping force of the rear suspension 30 from the fourth value to the second value. Note that Step S9 may be performed before Step S8 and may be simultaneously performed with Step S8.

As has been described above, according to the motorcycle 1 of this embodiment, when cruise control is started, the damping forces of the front fork 20 and the rear suspension 30 is reduced, and thus, during cruise control, vibrations from a road surface are less likely to be transmitted to the rider. Therefore, riding comfort of the motorcycle 1 during cruise control can be increased. On the other hand, when cruise control is terminated, the damping forces of the front fork 20 and the rear suspension 30 is increased, so that a behavior of the motorcycle 1 is stabilized at sudden braking, during cornering, or the like.

According to this embodiment, when the rider operates the accelerator grip 16A during cruise control, the cruise control is temporarily stopped and the motorcycle 1 accelerates. At this time, with the damping forces of the front fork 20 and the rear suspension 30 kept reduced, there is a probability that pitching due to acceleration occurs. However, according to this embodiment, when the rider operates the accelerator grip 16A, control in which the damping forces is reduced by the suspension controller 63 is temporarily stopped, so that the damping forces of the front fork 20 and the rear suspension 30 are restored to the damping forces thereof before the above-described control. Therefore, when the rider accelerates the motorcycle 1 at his or her own intension, pitching can be suppressed.

One embodiment of the straddled vehicle has been described above, but the above-described embodiment is merely an example. Various other embodiments are also possible.

In the above-described embodiment, the suspension controller 63 reduces both the damping force of the front fork 20 and the damping force of the rear suspension 30 during cruise control, but the suspension controller 63 may be configured to reduce only one of the damping force of the front fork 20 and the damping force of the rear suspension 30.

The suspension controller 63 may be configured to keep the damping forces of the front fork 20 and the rear suspension 30 constant during cruise control and may be configured to change the damping forces of the front fork 20 and the rear suspension 30 in accordance with a vehicle speed, an acceleration, or the like of the motorcycle 1 during cruise control.

The front fork 20 is an example of an electronically controlled front suspension, but the front suspension is not limited to the front fork 20. The front suspension is not limited to a front suspension including a telescopic type mechanism, but may be a front suspension including a telelever type mechanism.

The straddled vehicle is a vehicle that a rider straddles to ride. The straddled vehicle is not limited to the motorcycle 1. The straddled vehicle may be, for example, a motor tricycle, an all-terrain vehicle (ATV), a snowmobile, or the like.

Changes may be made to straddled vehicle 1 without, however, departing from the protective scope defined in the accompanying Claims.

### Reference Signs List

1 motorcycle (straddled vehicle), 8 front wheel, 9 rear wheel, 10 vehicle body frame, 16A accelerator grip (accelerator operator), 20 front fork (front suspension), 22 radar (preceding vehicle detection device), 23 vehicle speed sensor, 30 rear suspension, 60 control device, 61 traveling controller, 62 temporary stopper, 63 suspension controller

## Claims

1. A straddled vehicle (1) comprising:
a vehicle body frame (10);
a front wheel (8) supported by the vehicle body frame (10);
a rear wheel (9) supported by the vehicle body frame (10);
an electronically controlled front suspension (20) connected to the vehicle body frame (10) and the front wheel (8);
an electronically controlled rear suspension (30) connected to the vehicle body frame (10) and the rear wheel (9);
a vehicle speed sensor (23) supported by the vehicle body frame (10);
a preceding vehicle detection device (22) that is supported by the vehicle body frame (10) and detects an inter-vehicle distance from a preceding vehicle; and
a control device (60) connected to the front suspension (20), the rear suspension (30), the vehicle speed sensor (23), and the preceding vehicle detection device (22),
wherein
the control device (60) includes
a traveling controller (61) that executes cruise control including control in which the straddled vehicle (1) is caused to travel such that a vehicle speed detected by the vehicle speed sensor (23) is a set speed or control in which the straddled vehicle (1) is caused to follow the preceding vehicle such that the vehicle speed detected by the vehicle speed sensor (23) is equal to or lower than the set speed and the inter-vehicle distance detected by the preceding vehicle detection device (22) is a set distance, and
a suspension controller (63);
**characterized in that** said suspension controller (63) executes control in which, when the cruise control is started, a damping force of the front suspension (20) and/or a damping force of the rear suspension (30) is reduced and, when the cruise control is terminated, the damping force of the front suspension (20) and/or the damping force of the rear suspension (30) is increased.

2. The straddled vehicle (1) according to claim 1, further comprising:
an accelerator operator (16A) that is supported by the vehicle body frame (10) and is operated by a rider,
wherein
the control device (60) includes a temporary stopper (62) that, when an operation of the accelerator operator (16A) is started while the traveling controller (61) is executing the cruise control, stops the cruise control of the traveling controller (61) and the control of the suspension controller (63) and, when the operation of the accelerator operation (16A) is terminated, restarts the cruise control of the traveling controller (61) and the control of the suspension controller (63).

## Patentansprüche

1. Spreizsitz-Fahrzeug (1), das umfasst:
einen Fahrzeug-Karosserierahmen (10);
ein Vorderrad (8), das von dem Fahrzeug-Karosserierahmen (10) getragen wird;
ein Hinterrad (9), das von dem Fahrzeug-Karosserierahmen (10) getragen wird;
eine elektronisch gesteuerte vordere Aufhängung (20), die mit dem Fahrzeug-Karosserierahmen (10) und dem Vorderrad (8) verbunden ist;
eine elektronisch gesteuerte hintere Aufhängung (30), die mit dem Fahrzeug-Karosserierahmen (10) und dem Hinterrad (9) verbunden ist;
einen Fahrzeuggeschwindigkeits-Sensor (23), der von dem Fahrzeug-Karosserierahmen (10) getragen wird;
eine Vorrichtung (22) für Erfassung eines vorausfahrenden Fahrzeugs, die von dem Fahrzeug-Karosserierahmen (10) getragen wird und einen Fahrzeugabstand zu einem vorausfahrenden Fahrzeug erfasst; sowie
eine Steuerungsvorrichtung (60), die mit der vorderen Aufhängung (20), der hinteren Aufhängung (30), dem Fahrzeuggeschwindigkeits-Sensor (23) sowie der Vorrichtung (22) für Erfassung eines vorausfahrenden Fahrzeugs verbunden ist,
wobei
die Steuerungsvorrichtung (60) enthält:
eine Fahrt-Regelungseinrichtung (61), die automatische Geschwindigkeitsregelung ausführt, die Regelung, bei der das Spreizsitz-Fahrzeug (1) veranlasst wird, so zu fahren, dass eine von dem Fahrzeuggeschwindigkeits-Sensor (23) erfasste Fahrzeuggeschwindigkeit eine Soll-Geschwindigkeit ist, oder Regelung einschließt, bei der das Spreizsitz-Fahrzeug (1) veranlasst wird, dem vorausfahrenden Fahrzeug so zu folgen, das die von dem Fahrzeuggeschwindigkeits-Sensor (23) erfasste Fahrzeuggeschwindigkeit genauso hoch ist wie oder niedriger als die Soll-Geschwindigkeit und der durch die Vorrichtung (22) für Erfassung eines vorausfahrenden Fahrzeugs erfasste Fahrzeugabstand ein Soll-Abstand ist, sowie
eine Aufhängungs-Steuerungseinrichtung (63);
**dadurch gekennzeichnet, dass** die Aufhängungs-Steuerungseinrichtung (63) Steuerung ausführt, bei der, wenn die automatische Geschwindigkeitsregelung begonnen wird, eine Dämpfkraft der vorderen Aufhängung (20) und/oder eine Dämpfkraft der hinteren Aufhängung (30) reduziert werden/wird, und wenn die automatische Geschwindigkeits-regelung beendet wird, die Dämpfkraft der vorderen Aufhängung (20) und/oder die Dämpfkraft der hinteren Aufhängung (30) verstärkt werden/wird.

2. Spreizsitz-Fahrzeug (1) nach Anspruch 1, das des Weiteren umfasst:
eine Beschleunigungs-Betätigungseinrichtung (16A), die von dem Fahrzeug-Karosserierahmen (10) getragen wird und von einem Fahrer betätigt wird,
wobei
die Steuerungsvorrichtung (60) eine Einrichtung (62) zum vorübergehenden Unterbrechen enthält, die, wenn eine Betätigung der Beschleunigungs-Betätigungseinrichtung (16A) begonnen wird, während die Fahrt-Regelungseinrichtung (61) die automatische Geschwindigkeitsregelung ausführt, die automatische Geschwindigkeitsregelung der Fahrt-Regelungseinrichtung (61) sowie die Steuerung der Aufhängungs-Steuerungseinrichtung (63) unterbricht, und, wenn die Betätigung der Beschleunigungs-Betätigungseinrichtung (16A) beendet wird, die automatische Geschwindigkeitsregelung der Fahrt-Regelungseinrichtung (61) sowie die Steuerung der Aufhängungs-Steuerungseinrichtung (63) erneut beginnt.

## Revendications

1. Véhicule à selle (1) comprenant :
un cadre de véhicule (10) ;
une roue avant (8) soutenue par le cadre de véhicule (10) ;
une roue arrière (9) soutenue par le cadre de véhicule (10) ;
une suspension avant commandée électroniquement (20) connectée au cadre de véhicule (10) et à la roue avant (8) ;
une suspension arrière commandée électroniquement (30) connectée au cadre de véhicule (10) et à la roue arrière (9) ;
un capteur de vitesse de véhicule (23) soutenu par le cadre de véhicule (10) ;
un dispositif de détection de véhicule qui précède (22) qui est soutenu par le cadre de véhicule (10) et détecte une distance entre véhicules depuis un véhicule qui précède ; et
un dispositif de commande (60) connecté à la suspension avant (20), à la suspension arrière (30), au capteur de vitesse de véhicule (23) et au dispositif de détection de véhicule qui précède (22),
dans lequel
le dispositif de commande (60) inclut
un contrôleur de déplacement (61) qui exécute une commande d'allure incluant une commande par laquelle le véhicule à selle (1) est amené à se déplacer de sorte qu'une vitesse de véhicule détectée par le capteur de vitesse de véhicule (23) constitue une vitesse ou une commande définie par laquelle le véhicule à selle (1) est amené à suivre le véhicule qui précède de sorte que la vitesse de véhicule détectée par le capteur de vitesse de véhicule (23) est inférieure ou égale à la vitesse définie et la distance entre véhicules détectée par le dispositif de détection de véhicule qui précède (22) est une distance définie, et
un contrôleur de suspension (63) ;
**caractérisé en ce que** ledit contrôleur de suspension (63) exécute une commande par laquelle, lorsque la commande d'allure démarre, une force d'amortissement de la suspension avant (20) et/ou une force d'amortissement de la suspension arrière (30) est réduite et, lorsque la commande d'allure s'arrête, la force d'amortissement de la suspension avant (20) et/ou la force d'amortissement de la suspension arrière (30) est augmentée.

2. Le véhicule à selle (1) selon la revendication 1, comprenant en outre :
un actionneur d'accélérateur (16A) qui est soutenu par le cadre de véhicule (10) et est actionné par un conducteur,
dans lequel
le dispositif de commande (60) inclut un dispositif d'arrêt temporaire (62) qui, lorsque l'opération de l'actionneur d'accélérateur (16A) est démarrée tandis que le contrôleur de déplacement (61) exécute la commande d'allure, arrête la commande d'allure du contrôleur de déplacement (61) et la commande du contrôleur de suspension (63) et, lorsque l'opération de l'actionneur d'accélérateur (16A) est terminée, redémarre la commande d'allure du contrôleur de déplacement (61) et la commande du contrôleur de suspension (63).
